# EUROPÄISCHE PATENTANMELDUNG

(11) **EP 2 204 276 A2**
(43) Veröffentlichungstag der Anmeldung: **07.07.2010**
(21) Anmeldenummer: 09011416.6
(22) Anmeldetag: 04.09.2009
(51) Int. Cl.: B29C 70/24, B32B 5/02, B32B 5/14

(54) **Mehrlagiger Schichtwerkstoff und Verfahren zu dessen Herstellung**

(30) Priorität: 05.09.2008 DE 102008047408
(71) Anmelder: Gelbricht, Mike, 01774 Höckendorf (DE); Institut für Holztechnologie Dresden gGmbH, 01217 Dresden (DE)
(72) Erfinder: Gelbricht, Mike, 01774 Höckendorf (DE); Blüthgen, Lars, 01936 Neukirch (DE); Rehm, Matthhias, 01217 Dresden (DE)
(74) Vertreter: Kailuweit, Frank

(57) **Zusammenfassung**

Der mehrlagige Schichtwerkstoff findet Verwendung als Halbzeug oder Fertigerzeugnis, vorzugsweise bei der Herstellung von Sportgeräten, wie Gleitbrettern, Snowboards, Ski oder Surfbrettern und als Bauteil, insbesondere als Halbzeug für die Herstellung von Ladepritschen und Bordwänden von Nutzfahrzeugen oder Sportböden, wie Tennis-, Badminton- oder Squash-Sportböden.
Der mehrlagige Schichtwerkstoff besteht aus einem Kern (1), einem Ober- und/oder Untergurt (O, U), mit jeweils mindestens einer oberen und/oder einer unteren Tragschicht (4o, 4u), die durch eine Anzahl einzelner, zueinander beabstandeter und im Wesentlichen vertikal verlaufender elastischer Verbindungselemente (3) verbunden sind. Vorteilhaft sind die Enden der Verbindungselemente (3) mit elastischen Fasern oder Faserbündeln untereinander verbunden sind, die eine horizontal verlaufende netz- oder matrixförmigen Struktur (H) bilden.

## Beschreibung

Die Erfindung betrifft einen mehrlagigen Schichtwerkstoff als Halbzeug oder Fertigerzeugnis, insbesondere für die Herstellung von Sportgeräten, wie Gleitbretter, Snowboards, Ski oder Surfbretter und als Bauteil, insbesondere als Halbzeug für die Herstellung von Ladepritschen von Nutzfahrzeugen oder von Sportböden, wie Tennis-, Badminton-, Squash-Sportböden, mit speziell angeordneten Verbindungselementen zwischen den Komponenten Ober- und Untergurt sowie dem Kern zur Steigerung der Resistenz gegenüber Krafteinwirkung, insbesondere bei extremen stochastischen Lastfällen. Daneben betrifft die Erfindung ein Verfahren zur Herstellung eines mehrlagigen Schichtwerkstoffes sowie dessen Verwendung.

Speziell bei stochastischen, dynamischen Beanspruchungen (Snowboarden im Tiefschnee, Fahrten von Nutzkraftfahrzeugen auf unbefestigten Wegen) unterliegen bekannte Schichtwerkstoffe extremen Belastungen, die zum Gewaltbruch oder zum Abriss der Deckschichten der mehrlagigen Schichtwerkstoffe führen.

Derzeit existieren verschiedene Ansätze, die Lebensdauer und Haltbarkeit von mehrlagigen Schichtwerkstoffen zu erhöhen. So werden im Sportgerätebau bei der Herstellung von Gleitbrettern, insbesondere Snowboards, Fäden aus Glasfasern in die zum Kern gerichteten Flächen des Ober- und Untergurtes fest eingebracht und an ihren gegenüberliegenden losen Enden wirr zusammengelegt [DE 29 41 949 A1]. Ober- und Untergurt werden daraufhin in einen definierten Abstand zueinander gebracht. In den Zwischenraum, in welchem die losen Enden der Fäden wirr gelegt sind, wird der Kern mit einem Polyurethanschaum ausgeschäumt. Nach dem Aushärten des Kerns sind die wirr gelegten Fäden, und somit Ober- und Untergurt, fest mit dem Kernmaterial verbunden.

Zum anderen sind im Sportgerätebau Lösungen bekannt, bei denen der Ober- und Untergurt über Rippen, die durch den Kern verlaufen, miteinander verbunden sind oder bei denen filamentähnliche Verbindungsteile den Ober- und Untergurt wechselseitig verbinden [EP 0 846 479 B1]. Der Kern weist dabei Schlitze auf, in welche die Verbindungselemente gelegt und in Epoxydharz getränkt werden, worauf anschließend der Ober- und Untergurt aufgeklebt wird. Dabei werden diese Glas-oder Kohlenstoff-Filamente durch einen Satz von Stichen gebildet und sind in Längsrichtung des Snowboards durchgehend miteinander verkettet. Ein wesentlicher Nachteil dieser Lösung besteht darin, dass durch das Einbringen von starren Rippen als Kern der mehrlagige Schichtwerkstoff ausgesteift wird und dieser nicht mehr in der Lage ist, dauerhaft elastische Verformungen, insbesondere bei Biegewechselbeanspruchungen, aufzunehmen und weiterzuleiten. Demgegenüber sollen die gattungsgemäßen, mehrlagigen Schichtwerkstoffe aufgrund ihres Einsatzzweckes eine definierte Elastizität aufweisen.
Die durchgehende Verkettung von Glas- oder Kohlenstofffilamenten, wie in der EP 0 846 479 B1, hat zudem den Nachteil, dass der Kern des mehrlagigen Schichtwerkstoffes durch die Vielzahl der notwendigen Durchbrüche für die Durchführung der Filamente geschwächt wird. Auch das Abreißen der Ober- und Untergurte vom Kern wird nicht vermieden, da diese nicht formschlüssig miteinander verbunden sind, sondern die in Harz getränkten Verbindungselemente den Kern und die angrenzenden Ober- oder Untergurte lediglich miteinander verkleben. Zudem ist die Fertigung dieser Variante sehr aufwendig.

Eine weitere Möglichkeit, mehrlagige Schichtwerkstoffe resistenter gegen stochastische Krafteinwirkungen zu gestalten, ist es, die Ober- und Untergurte mehrlagig auszuführen. Die Anzahl der Lagen beträgt dabei z. B. bei Snowboards bis zu 8 Schichten. Ein Nachteil besteht hier in der unerwünschten Aussteifung des Schichtwerkstoffes und der Verschlechterung seiner Federungs- und Dämpfungseigenschaften.

Ein Ablösen der Oberfläche sowie der oberen Tragschicht vom Kern ist bei den Lösungen nach dem Stand der Technik bei starker Verformung nicht vermeidbar. Auch durch wirr gelegte Verbindungsfäden zwischen den Tragschichten und dem Kern [DE 2941949 A1] wird dies nicht verhindert, da sich bei Verformung des Snowboards die Verbindungsfäden zunächst straffen. Die Fäden nehmen erst Zugspannungen auf, wenn sich die Tragschicht bereits abgelöst hat.
Auch die Variante, den Ober- und Untergurt mehrlagig auszuführen, stößt an Grenzen. Neben höheren Fertigungskosten und technologischen Problemen beim Recyceln weisen diese Schichtwerkstoffe ein höheres Gewicht und ein geändertes Schwingungsverhalten auf.

Aufgabe der Erfindung ist es, die Nachteile des bekannten Standes der Technik zu eliminieren und einen mehrlagigen Schichtwerkstoff als Halbzeug oder Fertigerzeugnis für die Herstellung von Sportgeräten, insbesondere von Gleitbrettern, wie Snowboards, Ski oder Surfbretter und als Bauelement, insbesondere als Halbzeug für die Herstellung von Ladepritschen von Nutzfahrzeugen oder von Sportböden, wie von Tennis-, Badminton- oder Squash-Sportböden vorzuschlagen, der eine höhere Resistenz gegenüber bestimmungsgemäßen Krafteinwirkungen, insbesondere stochastischen, elastischen Verformungen aufweist und eine höhere normative Nutzungsdauer gegenüber bekannten, mehrlagigen Schichtwerkstoffen aufweist. Eine weitere Aufgabe besteht darin, den mehrlagigen Schichtwerkstoff so auszubilden, dass er mit geringem Aufwand individuell an die zu erwartenden, individuellen Belastungssituationen angepasst werden kann.

Erfindungsgemäß wird die Aufgabe gelöst durch die Merkmale des Hauptanspruchs, des Nebenanspruchs 11 sowie der Verfahrens- und Verwendungsansprüche.

Der erfindungsgemäße mehrlagige Schichtwerkstoff besteht aus einem Kern mit jeweils mindestens einer, darüber und/oder darunter angeordneten Tragschicht. Sind auf der Ober- und Unterseite des Kernes jeweils mehrere Tragschichten aufgebracht, so bilden diese je ein Tragschichtpaket. Diese oberen und unteren Tragschichtpakete sind mittels einer Vielzahl von zueinander beabstandeten, einzelnen Verbindungselementen, insbesondere Fasern, die im Wesentlichen vertikal durch den Kern verlaufen, miteinander verbunden, um das Abreißen dieser Tragschichten vom Kern zu verhindern.
Die ein- oder mehrlagigen Tragschichten bestehen vorzugsweise aus Glasfaser-laminaten, Karbonlaminaten, Naturfaserlaminaten oder einem Gemisch aus diesen Werkstoffen.
Unterhalb der unteren Tragschicht ist optional eine Grundschicht angeordnet, die je nach Verwendung des mehrlagigen Schichtwerkstoffes unterschiedlich ausgebildet ist. So bildet die Grundschicht bei einem Gleitbrett (Snowboard, Ski) die Lauffläche, die aus einem Schichtwerkstoff oder einer ein- oder mehrlagigen Beschichtung aus einem Werkstoff mit geringem Reibkoeffizienten besteht.
Oberhalb der oberen Tragschicht ist eine optionale Deckschicht angeordnet, deren Eigenschaften ebenfalls von der Verwendung des mehrlagigen Schichtwerkstoffes bestimmt werden. So besteht die Deckschicht bei einem Gleitbrett aus einer dünnwandigen oder filmartigen, elastischen Schicht, die das Eindringen von Wasser verhindert.

Der Kern weist je nach Einsatzfall eine geschlossene oder eine offene Struktur, bevorzugt eine Wabenstruktur auf oder ist bevorzugt als Laminat oder als Massiv-oder Schaumkern ausgebildet.
Der Kern besteht aus an sich bekannten Konstruktionswerkstoffen, wie Kunststoff, Textilgewebe oder Aluminium. Ebenso kann der Kern auch als Holzkern oder als lagenförmiger Hybridkern aus den genannten Werkstoffen ausgeführt sein. Bevorzugt werden als Kernmaterialien Werkstoffe mit einer wabenförmigen Struktur verwendet, da die vertikalen Verbindungselemente durch die vorhandenen Durchbrüche oder Kanäle geführt werden können. Ebenso vorteilhaft können bei einem geschäumten Kern die im Wesentlichen vertikalen verlaufenden Verbindungselemente bereits bei der Herstellung des Kerns fest in diesen integriert werden.

Der Kern weist eine Anzahl beabstandeter Durchdringungen (Bohrungen, Kanäle, offene Waben einer Wabenstruktur) auf. Durch diese Durchdringungen verlaufen die Verbindungselemente, deren Enden außerhalb des Kerns mit der Grundschicht und der Deckschicht verbunden sind.
Die Anzahl, die lokale Anordnung der Durchdringungen sowie deren Abstände untereinander werden von der individuellen Belastung des mehrlagigen Schichtwerkstoffes bestimmt.
In einer bevorzugten Ausbildung weist der mehrlagige Schichtwerkstoff eine geometrisch determinierte, regelmäßige Anordnung der gleich beabstandeten Durchdringungen mit den darin angeordneten Verbindungselementen auf. Ein so ausgebildeter Schichtwerkstoff kann vorteilhaft eingesetzt werden bei einer gleichförmigen Belastung (Biegung, Torsion) in allen Bereichen des künftigen Konstruktionsteils.
Ein weiterer Vorteil besteht in den reduzierten Fertigungskosten, da die so ausgebildeten mehrlagigen Schichtwerkstoffe kostengünstig in größeren Stückzahlen oder Losgrößen produziert oder als Halbzeuge vorgefertigt werden können.

Ein weiterer Vorteil besteht darin, dass ein mehrlagiger Schichtwerkstoff mit geometrisch determinierter, regelmäßiger Anordnung der gleich beabstandeten Durchdringungen für geringere Belastungen in modifizierter Form verwendet werden kann. Dabei weisen nicht alle Durchdringungen auch Verbindungselemente auf, die die Tragschichten miteinander verbinden. So kann bei geringeren Kräften und Momenten und gleichförmiger Belastung nur jede zweite oder dritte Durchdringung mit einem Verbindungselement versehen werden.

Ein entscheidender Vorteil des innovativen mehrlagigen Schichtwerkstoffes besteht darin, dass bei unterschiedlichen Belastungsfällen in den einzelnen Bereichen des künftigen Konstruktionsteiles die Anzahl der Verbindungselemente, deren Abstände zueinander und die geometrische Verteilung an die aufzunehmenden Spannungen individuell angepasst werden können.
So werden beispielsweise bei Sportgeräten, wie Snowboards, beim Fahren im Tiefschnee außerhalb präparierter Pisten die äußeren Randzonen des Boards durch extreme Biegewechselbeanspruchungen belastet. Um das Board präzise steuern zu können, müssen die Druckkräfte und Momente von der Standposition des Fahrers in die hochbelasteten Randzonen übertragen werden. Dies geschieht nach dem Stand der Technik durch das Einlaminieren horizontal verlaufender Rippen, die von der Standfläche des Fahrers bis in die Randzonen reichen.
Ein entscheidender Nachteil dieser Lösung besteht darin, dass der dazwischenliegende, mittlere Bereich des Boards ausgesteift wird. Dadurch verliert das Board die gewünschte Flexibilität/Weichheit, die Voraussetzung für das Fahren im Tiefschnee ist.
Ein weiterer Nachteil besteht darin, dass durch die horizontal verlaufenden Rippen die Bruchneigung und die Gefahr des Abrisses der angrenzenden Tragschichten deutlich erhöht werden.

Bei dem innovativen mehrlagigen Schichtwerkstoff sind die Anzahl und die Verteilung der im Wesentlichen vertikal verlaufenden Verbindungselemente vorteilhaft an die Belastungssituation individuell anpassbar. So kann der Einzel- oder Kleinserienhersteller von Sportgeräten auf vorgefertigte Halbzeuge zurückgreifen, bei denen Kern und Tragschichten eine geometrisch gleichverteilte Anordnung von Durchdringungen mit darin lose angeordneten, vertikal verlaufenden Verbindungselementen aufweisen.
In Abhängigkeit von der jeweiligen, individuellen Belastungssituation [Größe, Gewicht des Fahrers, Standposition auf dem Board, präferierter Fahrstil (Freeride, Freestyle, Race)] können einzelne Verbindungselemente entfernt werden, um die gewünschte Weichheit/Flexibilität des Boards zu realisieren. Daneben kann mit geeigneten Mitteln die Einbauspannung der Verbindungselemente in einzelnen Bereichen des Boards erhöht werden.

In gleicher Weise können bei Anwendungen im Fahrzeug- oder Sportbodenbau die Anzahl, die Verteilung und die Höhe der Vorspannung der Verbindungselemente an die jeweilige Belastungssituation (Krafteinleitungspunkte vom Rahmen/Fahrgestell; unterschiedliche Federhärte bei Sportböden im Aufschlagbereich oder am Netz) individuell angepasst werden.

In einer vorzugsweisen Ausgestaltung werden als Verbindungselemente einzelne Fasern oder Faserbündel verwendet, deren auskragende Enden ausgefasert sind und sich auf der Kernoberfläche ausbreiten. Die Einzelfasern der Faserbündel sind dabei optional verspleißt oder verdrillt. Die ausgefaserten Enden der Fasern werden anschließend in Harz getränkt. Die Innenflächen der oberen und unteren Tragschicht werden ebenfalls in Harz getränkt, auf die Kernoberfläche aufgelegt und unter Druck und hoher Temperaturen miteinander verbunden.

Durch das Ausfasern wird die Verbindungsfläche zwischen den Verbindungselementen und der darauf liegenden Tragschicht vergrößert.
Bei mehreren Tragschichten werden alle, bis auf die äußerste Tragschicht, mit zueinander fluchtenden Durchdringungen, insbesondere Bohrungen oder Kanälen an den gleichen Positionen wie beim Kern ausgebildet, durch die die Verbindungselemente geführt werden.

Im Falle von Tragschichtpaketen mit mehreren Tragschichten werden Enden der Verbindungselemente zwischen der äußersten Tragschicht und der darunterliegenden Tragschicht positioniert, um diese Schichten miteinander zu verbinden. Sofern Fasern oder Faserbündel als Verbindungselemente eingesetzt werden, werden die Enden der ausgefaserten Verbindungselemente und die Tragschichtoberflächen ebenfalls in Harz getränkt, auf den Kern gelegt und anschließend der Gesamtverbund miteinander unter erhöhtem Druck und erhöhter Temperatur verbunden. So ist ein optimaler Zusammenhalt gewährleistet.

Als Verbindungselemente (3) für die Herstellung des mehrlagigen Schichtwerkstoffes werden bevorzugt Einzelfasern oder Faserbündel aus Glasfaser-, Karbonfaser oder Textilfaser eingesetzt. Um eine mechanische Zerstörung der Faser oder des Faserbündels durch Reibung an den Wandungen der Durchdringungen (2) oder untereinander zu verhindern, weisen die einzelnen Fasern eine abriebfeste Umhüllung auf. In einer alternativen, gleichfalls bevorzugten Ausbildung sind die Fasern oder Faserbündel im Bereich der Durchdringungen (2) vollständig stoffschlüssig mit der angrenzenden Wandung der Durchdringung (2) verbunden. Dazu werden die Fasern oder Faserbündel vor dem Einführen in die Durchdringungen (2) mit einem geeigneten Harz getränkt und anschließend verbleibende Hohlräume verfüllt.

Um eine sichere Verbindung der im Wesentlichen, vertikal verlaufenden Verbindungselemente (3) mit der Oberfläche der Tragschicht (4) zu ermöglichen, sind die auskragenden Enden (3o, 3u) der Verbindungselemente (3) bevorzugt ausgefasert oder tellerförmig ausgebreitet. Die Verbindung der auskragenden Enden der Verbindungselemente (3) erfolgt stoffschlüssig durch Verkleben, durch thermisches Aufschmelzen der Faserenden oder auf mechanischem Wege, z. B. durch Klammern.

Bevorzugt werden die Enden der Verbindungselemente (3) direkt mit der Oberfläche der Tragschicht (4) verklebt. Alternativ werden die auskragenden Enden der Verbindungselemente (3) bevorzugt mit mechanischen Verbindungsmitteln (z. B. Klammern) auf der Tragschicht (4) oder an deren Seitenfläche fixiert. Eine weitere vorteilhafte und gleichfalls bevorzugte Möglichkeit ist das Einbinden der losen Enden der Verbindungselemente (3) in flexible Spannmechanismen oder -verschlüsse. Mit dieser Variante können die Verbindungselemente (3) je nach Nutzungszustand gespannt, nachgespannt oder entlastet werden. Es ist weiterhin möglich, dass die Verbindungselemente (3) durch weitere verstärkende Elemente geführt und mit diesen entweder verklebt oder mechanisch (Knüpfen, Nähen) verbunden werden

Auf die Verbindungselemente (3) können zusätzliche Beschichtungswerkstoffe aufgebracht werden. Vor der Beschichtung können Unebenheiten, die durch die Verbindungselemente entstehen, mit ausgleichenden Massen egalisiert werden. Bei bestimmten Anwendungen, wie der Fertigung von Stirnwänden für Lastkraftfahrzeugen, müssen die Höhenunterschiede, die durch die Verbindungselemente (3) entstehen, nicht egalisiert werden.

Ein wesentlicher Vorteil des innovativen, mehrlagigen Schichtwerkstoffes besteht darin, dass der Schichtwerkstoff individuell an die jeweils vorhandene Belastungssituation des Einsatzfalles angepasst werden kann. So besteht die Möglichkeit, die Anzahl der im Wesentlichen vertikal verlaufenden Verbindungselemente (3) sowie den Abstand und die Verteilung der Verbindungselemente (3) untereinander auf die Belastungssituation abzustimmen.

Besonders bevorzugt für die Herstellung des mehrlagigen Schichtwerkstoffes wird die Verwendung eines Kernes mit Wabenstruktur oder eines Schaumkernes. Bei Wabenkernen können die bereits vorhanden, senkrechten Hohlräume als Durchdringungen (2) für die Verlegung der vorzugsweise faserförmigen Verbindungselemente (3) verwendet werden. Beim Schaumkern können die Durchdringungen mit mechanischen Mitteln, durch Laser- oder Wasserstrahlbearbeitung hergestellt werden. Neben der einfachen Fertigung des Schichtwerkstoffes bieten Kerne mit Wabenstruktur oder geschäumte Kerne den Vorteil einer deutlichen Gewichtsreduktion. So können speziell im Fahrzeugbau Ladeböden oder Seitenwandteile wesentlich leichter gestaltet werden. Insbesondere bei innerstädtischen Transporten mit häufigem Abbremsen und Beschleunigen der Fahrzeuge wird durch den Leichtbau der Kraftstoffverbrauch der Fahrzeuge signifikant reduziert.

In einer alternativen Ausbildung des mehrlagigen Schichtwerkstoffes sind die auskragenden Enden der Verbindungselemente (3) zumindest auf einer Seite untereinander horizontal netz- oder matrixförmig verbunden. Durch die horizontale Netzstruktur (H) werden die auftretenden Spannungen gleichmäßig auf die Oberfläche der jeweiligen Tragschicht übertragen. Ein weiterer Vorteil diese Lösung besteht darin, dass über die horizontal angeordneten netz- oder matrixförmigen Strukturen eine definierte axiale Vorspannung in das Bauteil eingebracht werden kann. Somit können größere Druckspannungen und Biegebelastungen bei gleichzeitiger Elastizität und gutem Federungsvermögen des Schichtwerkstoffes aufgenommen werden.

In einer weiteren, gleichfalls bevorzugten Fortbildung sind an oder in den im Wesentlichen vertikal verlaufenden Verbindungselementen (3) oder den elastischen Fasern oder Faserbündel der horizontalen, netz- oder matrixförmigen Struktur (H) Sensoren (Y) angeordnet. Als Sensoren (Y) können im einfachsten Fall Dehnmeßstreifen eingesetzt werden, die Längenänderungen an den Durchdringungen (2), den Verbindungselementen (3) oder den horizontal verlaufenden Fasern der Netzstruktur (H) detektieren und diese Informationen an ein Datenerfassungssystem übertragen. Damit können bei sicherheitsrelevanten Baugruppen rechtzeitig kritische Belastungssituationen erkannt und dokumentiert werden.

Aufgrund der besonderen Eigenschaften und der dargestellten Vorteile wird der mehrlagige Schichtwerkstoff bevorzugt verwendet als Fertigerzeugnis oder als Halbzeug für die Herstellung von Sportgeräten. Neben der Möglichkeit, Leichtbaukonstruktionen zu realisieren, bietet der innovative Schichtwerkstoff vorzugsweise die Möglichkeit, die Gestaltung der Sportgeräte auf die spezifische Belastungssituation einer bestimmten Sportart, insbesondere bei Trendsportarten, und zugleich an die individuellen Bedingungen des Benutzers (Größe, Körpergewicht, Körperhaltung, Fahrstil) anzupassen.

Gleichfalls bevorzugt ist die Verwendung des innovativen Schichtwerkstoffes für den Fahrzeugbau, zur Herstellung dynamisch hochbelasteter Baugruppen, wie Rotorblätter von Windkraftanlagen, insbesondere im Off-Shore-Bereich, für den Fahrzeug-, Schiffs- und Flugzeugbau.

Vorteilhaft wird ein mehrlagiger Schichtwerkstoff hergestellt, in dem - in Abhängigkeit von der zu erwartenden oder prognostizierten Belastungssituation - die Anzahl und die Position der numerisch ermittelten Verbindungselemente (3) bestimmt und mit bekannten technologischen Verfahren (Bohren, Laserbearbeitung) die Durchdringungen (2) in den Kern und die darüber- bzw. darunterliegenden Tragschichten eingebracht werden. In einem nächsten Schritt werden die vorzugsweise mit einer abriebfesten Ummantelung versehenen Fasern oder Faserbündel in den Durchdringungen (2) positioniert und die auskragenden Enden der Verbindungselemente (3) lösbar oder unlösbar mit der Oberfläche der jeweiligen Tragschicht und/oder mit einer optionalen, horizontal verlaufenden netz- oder matrixförmigen Struktur (H) aus Fasern oder Faserbündeln verbunden.

Bevorzugt werden die Verbindungselemente (3) und die horizontal verlaufenden netz- oder matrixförmigen Strukturelemente (H) vorimprägniert (PREPEG) und nach der Verlegung mit Wärmeenergie beaufschlagt und somit eine sichere Verklebung realisiert.

Um bei dem innovativen mehrlagigen Schichtwerkstoff im Einsatzfall das Eindringen von Feuchtigkeit in die Seitenflächen zu verhindern, weist der Schichtwerkstoff in einer gleichfalls bevorzugten Weiterbildung einen seitlichen Schutz auf.

So werden im Falle eines Gleitbrettes vor dem Verpressen oder Verbacken des Gesamtverbundes die schützenden Seitenwangen mit integriert. Sie verlaufen seitlich am Gleitbrett in dessen Längsrichtung. Die Seitenwangen leiten die Kräfte vom Obergurt auf die jeweilige Kante bzw. den Untergurt. Die Seitenwangen sind vorzugsweise zweiteilig ausgeführt und gelenkig (formschlüssig) sowie wasserdicht miteinander verbunden. Damit werden torsionale und vertikale Bewegungen ausgeglichen, was vorteilhaft zu einer besseren Performance und einer höheren Laufruhe des Gleitbrettes führt.

Durch die vertikale Verankerung von Kern, Seitenwangen und Mittelstringer können erstmals vorteilhaft Bereiche mit unterschiedlichen Steifigkeiten geschaffen werden. Zudem besteht die Möglichkeit, durch die lokale Vorspannung der Verbindungselemente den Kernen die notwendige Festigkeit bei gleichzeitiger Flexibilität/Weichheit zu verleihen.

Das aufwendige Zusammensetzten von Schichtkernen aus unterschiedlichen Werkstoffen ist somit nicht mehr erforderlich. Vorteilhaft erhöht sich zudem die Haltbarkeit und Belastung des Gleitbrettes erheblich. Durch die Möglichkeit, die Anzahl und die räumliche Anordnung der vertikalen Verbindungselemente und deren werkstofftechnische Eigenschaften (Festigkeit, Elastizitätsmodul) in Abhängigkeit von der Belastungssituation zu bestimmen, kann die vom Kunden gewünschte Performance des Gleitbrettes (Weichheit/Flexibilität) bei gleichzeitig hervorragender Resistenz gegenüber Gewaltbruch oder dem Abscheren von einzelnen Lagen des Schichtwerkstoffes einerseits über den Stringer- Wangenrahmen oder über die lokal unterschiedliche Vorspannung der Verbindungselemente realisiert werden.

Der Einsatz des innovativen mehrlagigen Schichtwerkstoffes als Ladeboden für Nutzfahrzeuge bietet vorteilhaft die Möglichkeit, die vertikalen Verstärkungselemente auch unmittelbar mit Teilen des Fahrzeugrahmens zu verbinden. Dadurch wird die Gesamtkonstruktion elastischer und unempfindlicher gegenüber Verwindungen oder stoßartigen Belastungen, wie bei Fahrten im Gelände oder beim Überfahren von Hindernissen, wie Gehwegbefestigungen oder Bordsteinen.

Weitere Vorteile bietet der Einsatz des innovativen mehrlagigen Schichtwerkstoffes als Sportboden. Unter dem Begriff Sportboden ist ein mehrteiliges Bodensystem zu verstehen, dass in der Regel aus Dämpfungselementen, einer Lattenunterkonstruktion und einer beschichteten Lauffläche (zum Beispiel ein mit Linoleum beschichteter Holzwerkstoff) besteht.
Bei den herkömmlichen Sportböden wird die Flexibilität über das Gesamtsystem realisiert. Gegenwärtig brechen bei dynamischer Belastung oft die relativ steifen Elemente eines Sportbodens (Laufflächenwerkstoff und Lattenunterkonstruktion). Die innovative Sportbodenplatte kann auf Grund der horizontalen und vertikalen Faserstränge gespannt werden und ist dadurch in definierten Grenzen beweglich.

Gleichfalls vorteilhaft ist die bevorzugte Verwendung des innovativen mehrlagigen Schichtwerkstoffes für die Herstellung der Lauffläche von Bühnenböden. Durch das definierte Einbringen der vertikalen Verbindungselemente (3) und die horizontale Netzstruktur kann die Masse des Bodens reduziert und das Federverhalten verbessert werden.

Im Folgenden wird die Erfindung anhand mehrerer Ausführungsbeispiele und zugehöriger Figuren näher erläutert.

Dabei zeigen:
- **Figur 1**: einen Querschnitt durch ein Snowboard mit einem Holzkern und einem Ober- und Untergurt.
- **Figur 2**: eine Draufsicht auf den isoliert dargestellten Holzkern (1) des Snowboards nach Fig. 1 mit einer lastabhängigen Verteilung der Durchdringungen (2), die die Verbindungselemente (3) aufnehmen.
- **Figur 3**: einen Querschnitt durch ein Snowboard mit einem Wabenkern und einem 3-schichtigen Ober- und Untergurt.
- **Figur 4**: eine Draufsicht auf den isoliert dargestellten Wabenkern des Snowboards nach Fig. 3.
- **Figur 5**: den Schnitt durch ein Snowboard mit Schaumkern (1) und integrierten, eingeschäumten Verbindungselementen (3), einem Ober- und Unter- gurt (4o, 4u) und einer integrierten, zweiteiligen Seitenwange (So, Su).

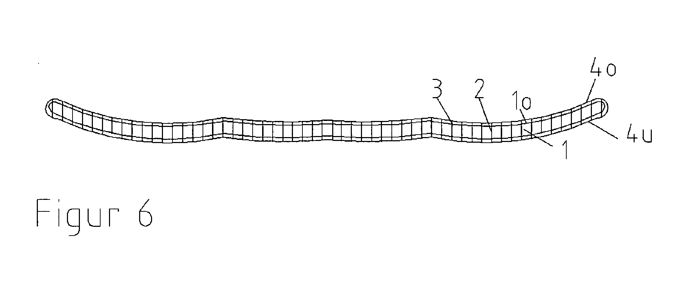

- **Figur 6**: einen seitigen Längsschnitt durch ein modernes Snowboard mit mehreren Vorspannungsradien ("Rockershapes") durch unter- schiedliche Vorspannung der Verbindungselemente (3) und der nicht näher dargestellten, horizontal verlaufenden netz- oder matrixförmigen Struktur (H) aus elastischen Fasern oder Faserbündeln.

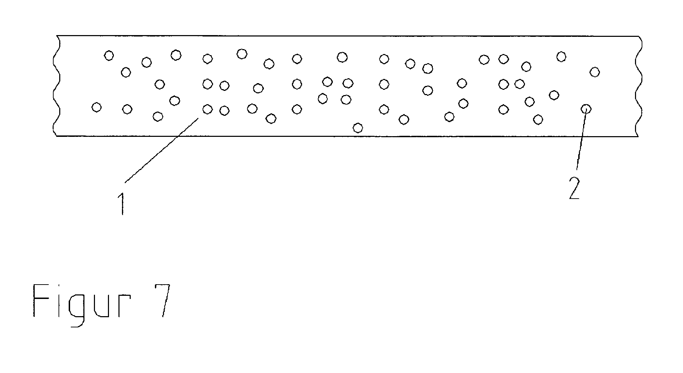

- **Figur 7**: eine Draufsicht auf den isoliert dargestellten Kern (1) des Snowboards nach Figur 6 mit lastabhängiger Verteilung der unterschiedlich beabstandeten Durchdringungen (2).

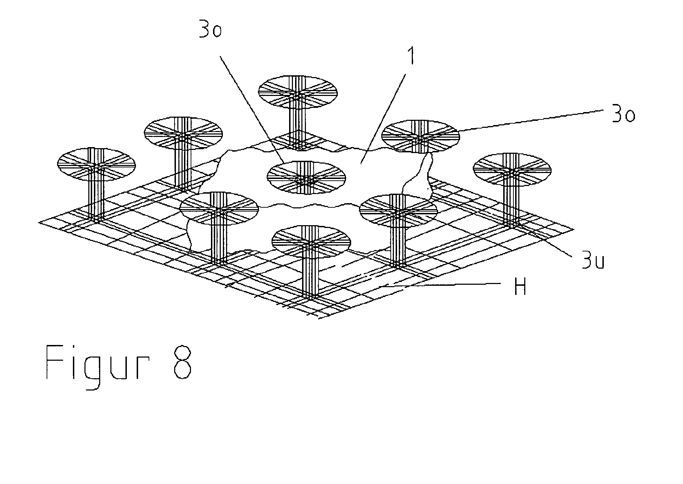

- **Figur 8**: in einer perspektivischen, stark schematisierten Darstellung einen mehrlagigen Schichtwerkstoff mit ausgeprägt flächenhafter, pilzförmiger Ausgestaltung der ausragenden oberen Enden (3o) der Verbindungs- elemente (3), die an ihre Unterseite (3u) untereinander horizontal durch eine netz- oder matrixförmige Struktur (H) verbunden sind.

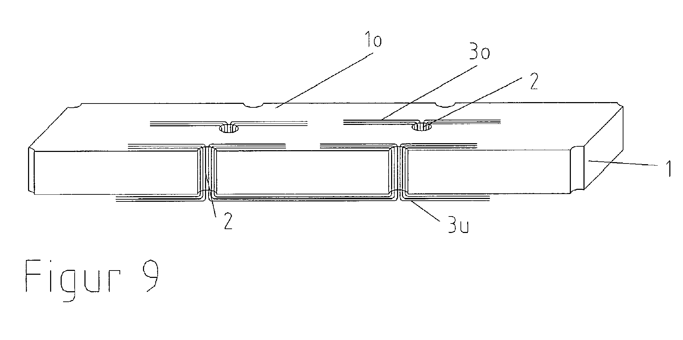

- **Figur 9**: in einer perspektivischen, frontseitig geschnittenen Darstellung einen nicht näher dargestellten mehrlagigen Schichtwerkstoff, bei dem die als Verbindungselemente (3) wirkenden Faserbündel durch räumlich benachbarte Durchdringungen (2) verlaufen. Damit können in diesen Bereichen neben den vertikalen Spannungen zusätzlich horizontale Spannungen aufgenommen und weitergeleitet werden. Zudem besteht die Möglichkeit, durch eine gezielte Vorspannung der Faserbündel (3o, 3u) an der Ober- bzw. Unterseite die horizontale und vertikale Vorspannung einzustellen.

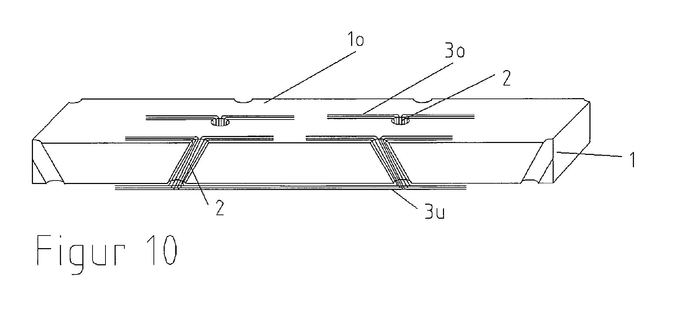

- **Figur 10**: ein zu Figur 9 analoges Ausführungsbeispiel, bei dem die Durchdringungen 2 (Bohrungen) unter einem Winkel von 45 - 60° zur Waagerechten verlaufen. Dadurch können Kerbspannungen minimiert oder vermieden werden.

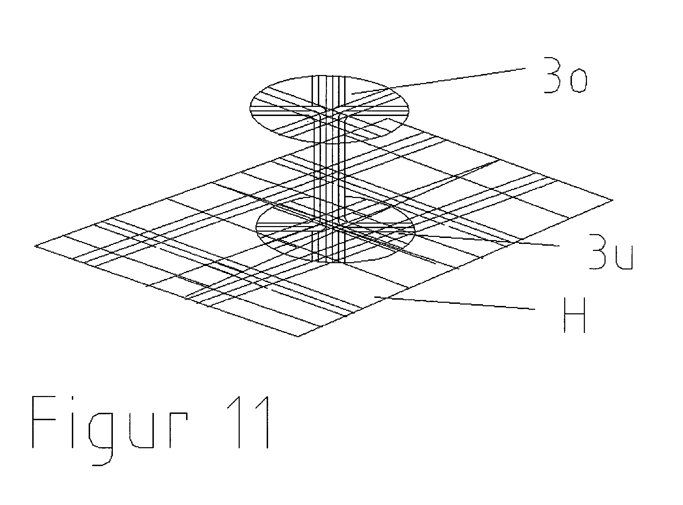

- **Figur 11**: die lokale Verbindung des unteren Endes eines pilzförmig gestalteten Verbindungselementes (3) mit einer, an der Unterseite (3u) horizontal eingebetteten matrixförmigen Faserstruktur (H).

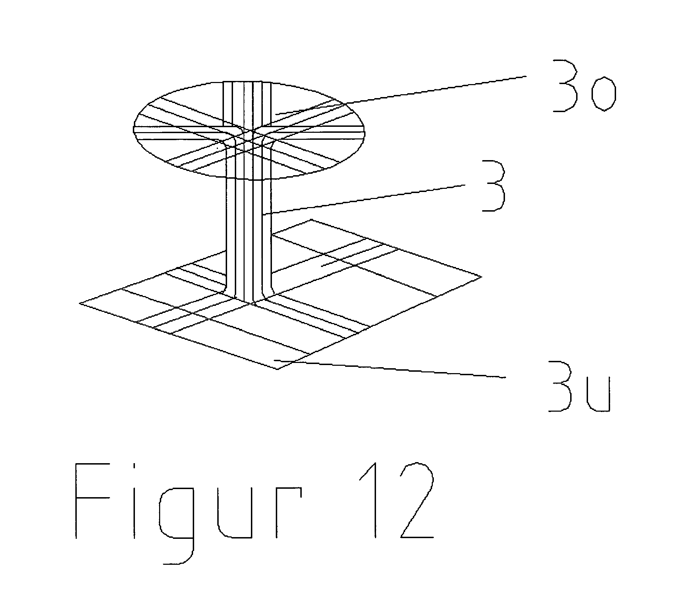

- **Figur 12**: ein Ausführungsbeispiel, bei dem die einzelnen Fasern bzw. Faserbündel des Verbindungselementes (3) an der Oberseite pilz- oder knopfförmig ausgebildet sind und ohne Unterbrechung an der Unterseite eine rechteckige Faserstruktur (3u) bilden. Dadurch können die auftretenden Spannungen auf unterschiedlich gestaltete Teilflächen übertragen werden.

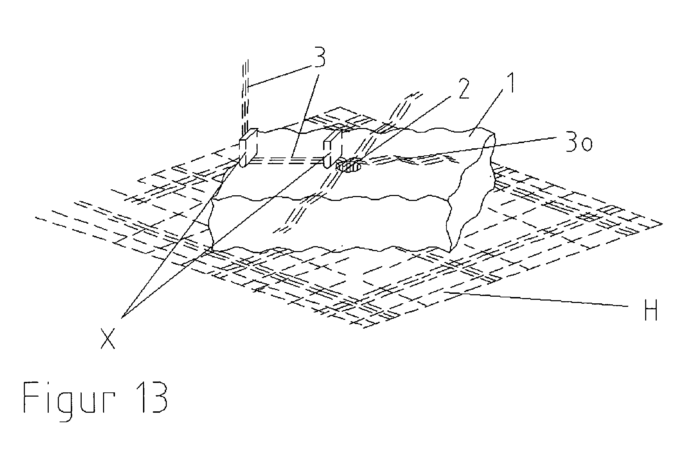

- **Figur 13**: einen nicht näher dargestellten mehrlagigen Schichtwerkstoff, bei dem die Unterseite (3u) durch eine horizontal verlaufende, netzförmige Struktur faserförmiger Verbindungselemente (H) gebildet wird, wobei die Enden der Fasern oder Faserbündel sich entlang der Oberseite des Schichtwerkstoffes erstrecken. Durch stilisiert dargestellte, lösbare Spannelemente (X) ist die Vorspannung der einzelnen elastischen Fasern bzw. Faserbündel des Verbindungselementes (3) einstellbar.

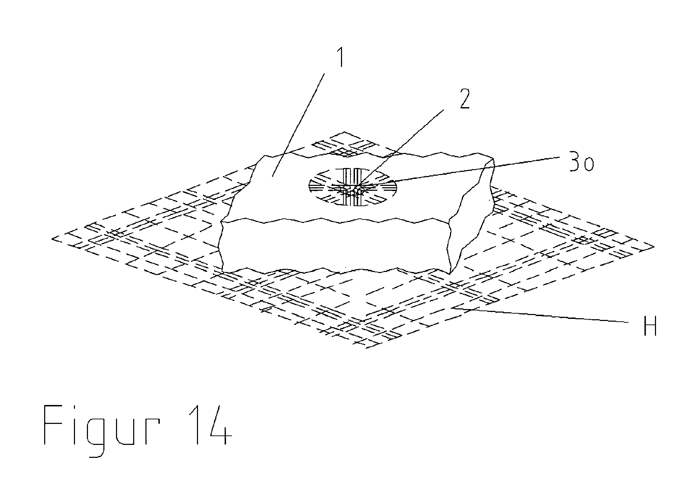

- **Figur 14**: einen nicht näher dargestellten mehrlagigen Schichtwerkstoff mit einer netzförmigen Faserstruktur der horizontal angeordneten Verstärkungs- elemente (H) an der Unterseite, wobei die Enden mehrerer Fasern oder Faserbündel des Verstärkungselementes (3) durch die vertikal verlaufende Durchdringung (2) bis auf die Oberseite geführt werden und eine kreisförmige Matrix (3o) bilden.

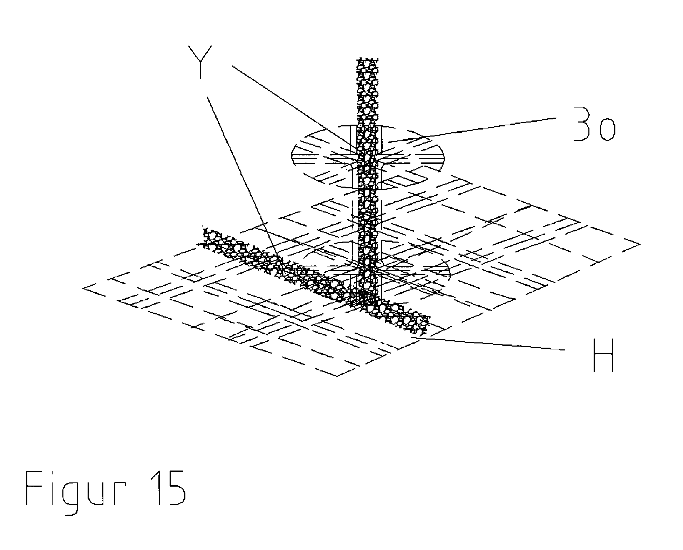

- **Figur 15**: in einer stark schematisierten Darstellung die Anordnung zweier Sensoren (Y), die in die horizontal verlaufende netz- oder matrix- förmige Struktur (H) und die vertikal angeordneten Verbindungs- elemente (3) eingebettet sind.

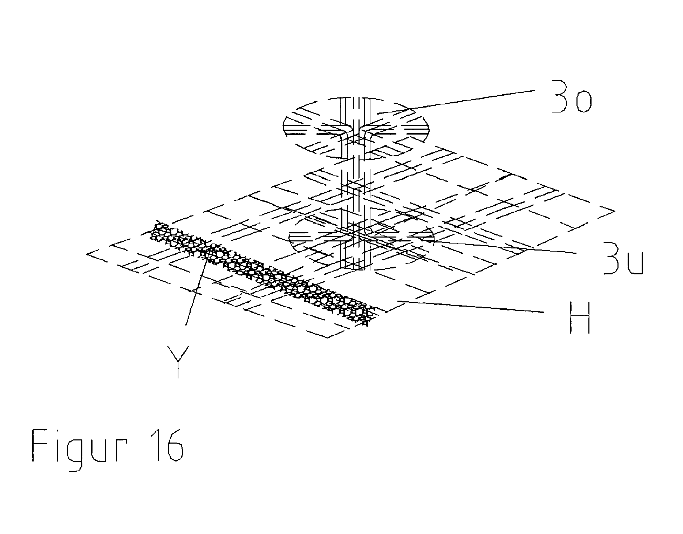

- **Figur 16**: die Anordnung eines einzelnen Sensors (Y), der beabstandet zur Durchdringung (2) angeordnet ist und Verformungen der an der Unterseite angeordneten, horizontal verlaufenden netz- oder matrix- förmige Struktur (H) erfasst.

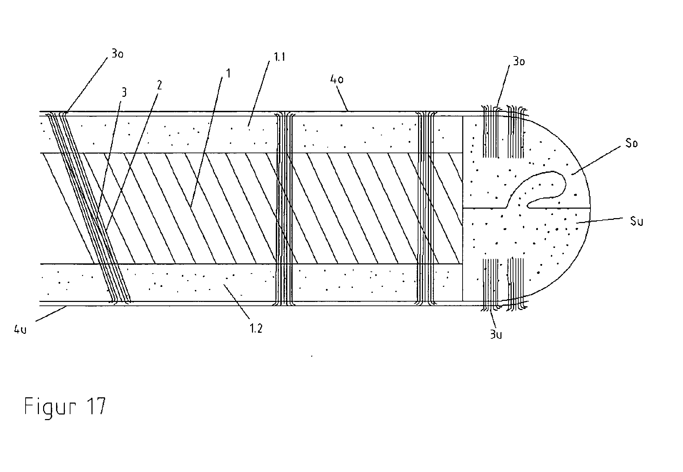

- **Figur 17**: einen Querschnitt durch ein Gleitbrett mit integrierter, zweiteiliger Seitenwange S. Die beiden Seitenwangenteile So, Su sind formschlüssig miteinander verbunden. Die in die Seitenwangenteile integrierten faserförmigen Verbindungselemente (3) verlaufen durch nicht näher dargestellte Durchdringungen (2) in der oberen bzw. unteren Tragschicht (4o, 4u). Dort werden die auskragenden Endungen (3o) flächig verklebt und nachfolgend verschliffen.

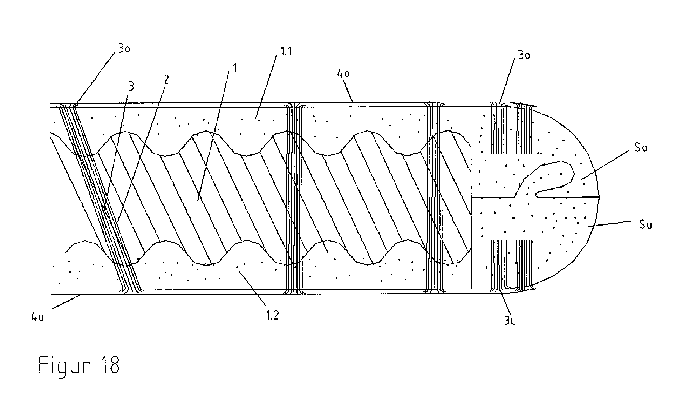

- **Figur 18**: einen Querschnitt durch ein Gleitbrett mit wellenförmigem Kern (1). In der höher belasteten Randzone des Gleitbrettes sind (in nicht näher dargestellten Durchdringungen) zwei senkrecht angeordnete büschel- förmige Verbindungselemente (3) dicht beabstandet dargestellt. Im angrenzenden Bereich des Gleitbrettes (linker Rand der Abbildung) ist ein Verbindungselement (3) unter einem Winkel von 60° zur Waagerechten angeordnet. Aus der größeren Länge der Faserbündel, aus dem dieses Verbindungselement (3) besteht, resultiert eine höhere Elastizität und Weichheit des Gleitbrettes in dieser Zone.

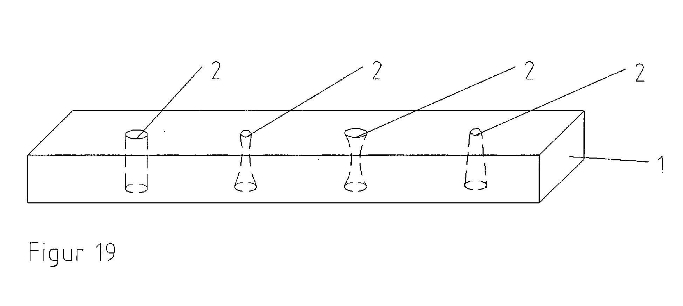

- **Figur 19**: die bevorzugte geometrische Ausbildung der Durchdringungen (2) im Kern (1). Von links: Zylinderform, sich nach oben verjüngende Form, Spindelform, Kegelstumpfform. Durch die bevorzugte Verwendung spindelförmiger Durchdringungen (2) kann die Reibung der Fasern oder Faserbündel der Verbindungselemente (3) an den Ober- und Unter- kanten des Kerns (1) deutlich reduziert werden.
- **Figur 20**: eine schematisierte Schnittdarstellung einer Ladepritsche mit angrenzender Stirnwand eines Nutzfahrzeuges.
- **Figur 21**: eine Schnittdarstellung durch einen Hallensportboden.
- **Figur 22**: eine Schnittdarstellung durch einen Bühnenboden.

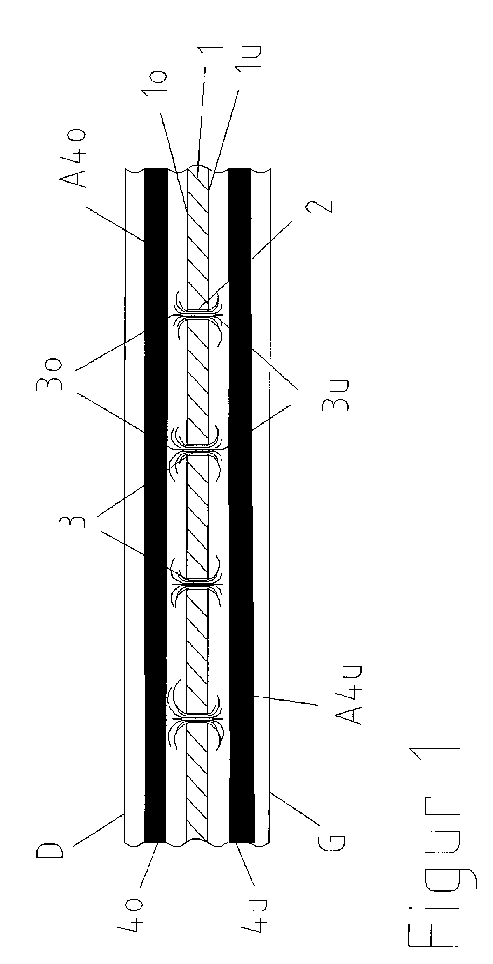

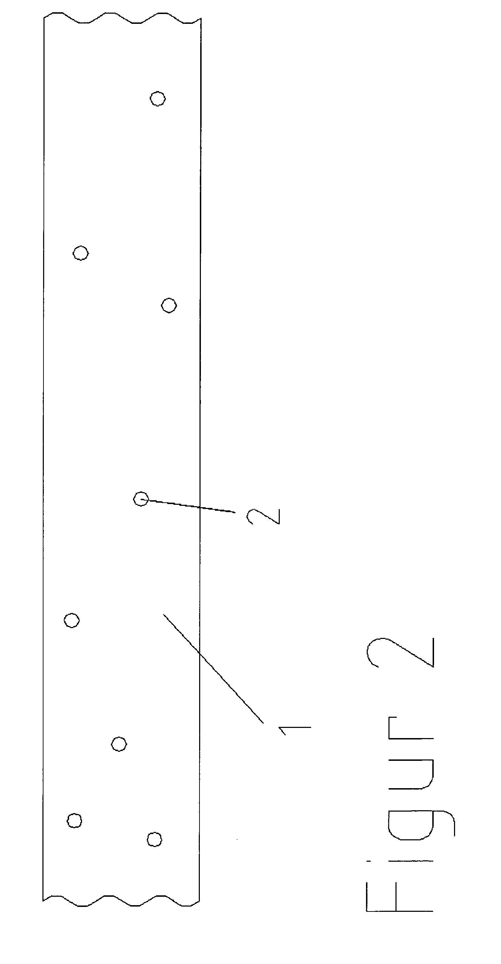

### Ausführungsbeispiel 1: Snowboard mit Holzkern und einem Ober- und Untergurt (Fig. 1 und 2)

Zur Erhöhung der Lebensdauer eines Snowboards wird zunächst der aus Holzlaminat bestehende Kern 1 mit Bohrungen 2 versehen. Durch diese Bohrungen 2 werden Glasfasern 3 geführt, deren Enden 3o und 3u aus dem Kern 1 herausragen. Diese Enden 3o und 3u werden ausgefasert und über die obere und untere Kernoberfläche 1o und 1 u ausgebreitet, um die Verbindungsfläche der jeweiligen Faser mit der darauf liegenden Tragschicht (Ober- und Untergurt) 4o und 4u zu erhöhen. Die obere Tragschicht (Obergurt) 4o, bestehend aus Glasfaser, und die Enden 3o der Glasfasern (Verbindungselemente) werden in Harz getränkt. Die gleichen Schritte erfolgen mit der unteren Tragschicht (Untergurt) 4u, die ebenfalls aus Glasfaser besteht. Im Anschluss wird der Kern 1 mit dem Ober- und Untergurt 4o und 4u unter Druck und erhöhten Temperaturen (80 - 100 °C) über eine Zeitdauer von 25 min verbunden. Im Weiteren wird die Deckschicht D auf die äußere Fläche des Obergurtes A4o und der Gleitbelag G auf die äußere Oberfläche des Untergurtes A4u geklebt.

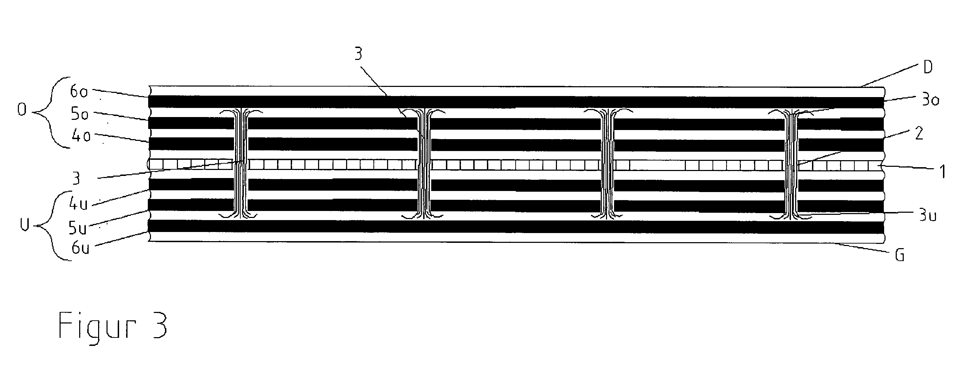

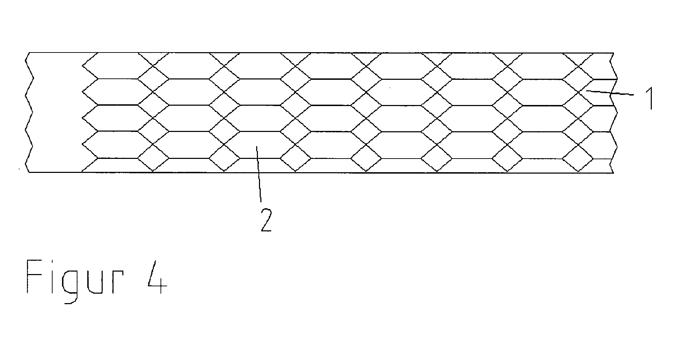

### Ausführungsbeispiel 2: Snowboard mit Wabenkern und einem 3-schichtigen Ober- und Untergurt (Fig. 3 und 4)

Die Herstellung des Snowboards mit Wabenkern 1 erfolgt analog der Herstellung des Snowboards mit einem laminierten Holzkern 1. Bei der Bauweise mit einem Wabenkern 1 sind keine Bohrungen 2 notwendig, da die für die Verbindungselemente 3 benötigten Durchdringungen 2 durch die Wabenstruktur bereits vorhanden sind. Durch diese Durchdringungen 2 werden Glasfasern 3 geführt, deren Enden 3o und 3u aus dem Kern 1 herausragen. Die oberen Tragschichten (Obergurt) 4o, 5o und 6o bestehen aus den 3 Glasfaser-Laminaten, wobei die mittlere 5o und die zum Kern 1 gerichtete Tragschicht 4o mit Bohrungen B versehen werden, durch die die Verbindungselemente 3, welche aus dem Kern 1 herausragen, geführt werden.
Das Ende 3o des Verbindungselementes wird zwischen der mittleren 5o und der äußeren Tragschicht 6o ausgefasert und über der Oberfläche ausgebreitet, um die Verbindungsfläche der jeweiligen Faser mit der darauf liegenden Tragschicht 6o zu erhöhen. Das ausgefaserte Ende 3o der Glasfaser (Verbindungselement) 3 wird in Harz getränkt. Außerdem werden die Flächen zwischen den einzelnen Tragschichten und die Oberfläche des Kernes 1o in Harz getränkt.
Die gleichen Schritte erfolgen mit den unteren Tragschichten (Untergurt U) 4u, 5u und 6u, die ebenfalls aus 3 Glasfaser-Laminaten bestehen. Im Anschluss wird der Kern 1 mit dem Ober- und Untergurt O und U unter Druck und hohen Temperaturen (80 -100 °C) über eine Zeitdauer von 25 min verbunden. Dadurch werden die mittleren Tragschichten 5o und 5u und die zum Kern 1 gerichteten Tragschichten 4o und 4u fest mit dem Kern 1 verbunden. Danach wird die Deckschicht D auf die äußere Fläche des Obergurtes O und der Gleitbelag G auf die äußere Oberfläche des Untergurtes U geklebt.

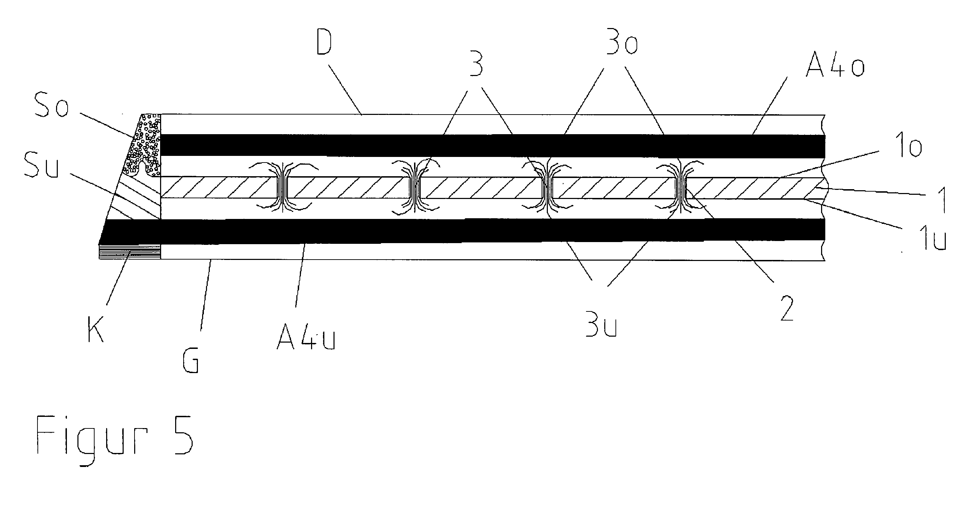

### Ausführungsbeispiel 3: Snowboard mit Schaumkern und integrierten eingeschäumten Verbindungselementen sowie einem Ober- und Untergurt (Fig. 5)

Zur Erhöhung der Lebensdauer eines Snowboards werden bei der Herstellung des Schaumkerns 1 Glasfasern als Verbindungselement 3 integriert. Diese ragen mit ihren Enden 3o und 3u aus dem Schaumkern 1 heraus. Nach dem Aushärten des Verbundes, bestehend aus dem Schaumkern 1 und den Glasfasern 3, werden die Enden 3o und 3u der Glasfasern 3 ausgefasert und über die obere und untere Kernoberfläche 1o und 1u ausgebreitet, um die Verbindungsfläche der jeweiligen Faser mit der darauf liegenden Tragschicht (Ober- und Untergurt) 4o und 4u zu erhöhen. Die obere Tragschicht (Obergurt) 4o aus Glasfaser und die Enden 3o der Glasfasern (Verbindungselemente) werden in Harz getränkt. Die gleichen Schritte erfolgen mit der unteren Tragschicht (Untergurt) 4u, die ebenfalls aus Glasfaser besteht. Für den seitlichen Schutz der Flanken des Snowboards werden an den Längsseiten des Snowboards bzw. des Kerns 1 zweiteilige Seitenwangen S (obere und untere Seitenwangen So, Su) und Kanten K angebracht. Die Seitenwangen So und Su sind gelenkig und wasserdicht miteinander verbunden. Im Anschluss wird der Kern 1 mit dem Ober- und Untergurt 4o und 4u, den Seitenwangen S und den Kanten K unter Druck und erhöhten Temperaturen (80 - 100 °C) über eine Zeitdauer von 25 min verbunden. Im Weiteren wird die Deckschicht D auf die äußere Fläche des Obergurtes A4o und der Gleitbelag G auf die äußere Oberfläche des Untergurtes A4u geklebt.

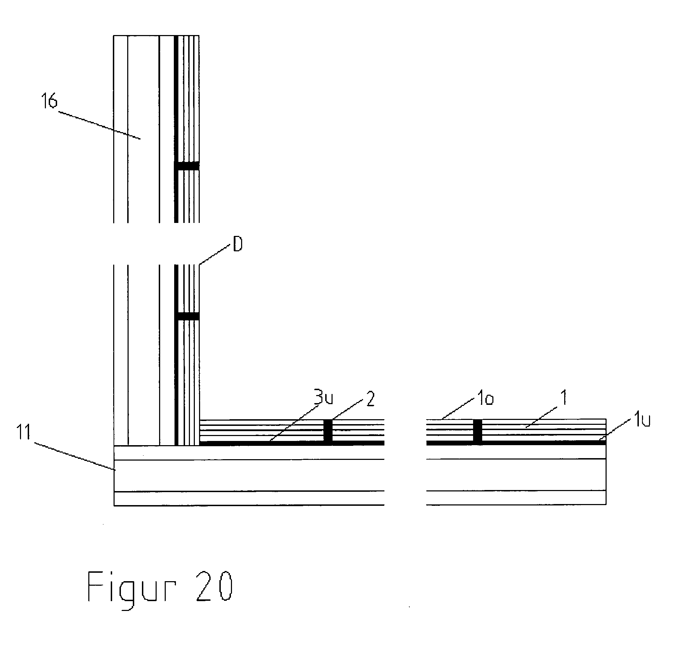

### Ausführungsbeispiel 4: Ladepritsche für Nutzfahrzeuge (Fig. 20)

Figur 20 zeigt in einer schematisierten Darstellung den Fahrzeugrahmen (11) eines Lastkraftwagens mit Stirnwand (16). Auf dem Fahrzeugrahmen (11) und an der Stirnwand (16) sind eine Anzahl erfindungsgemäßer, mehrlagiger Fahrzeugplatten montiert, die aus einer Anzahl aufeinander geklebter Furniere bestehen. Die Plattendicke beträgt vorzugsweise 21 mm. Die Plattenoberflächen sind zu ihrem Schutz mit einer Deckschicht (D) beschichtet. Die Schmalflächen der Platten sind mit einem Flüssigsystem und die weiteren Plattenoberflächen mit phenolimprägnierten Kraftpapieren versehen. In den Bereichen der Durchdringungen (2) der vertikalen Verbindungselemente (3) können ergänzend mechanische Verbindungsmittel, die zum Befestigen der Fahrzeugplatten am Fahrzeugrahmen (11) dienen" eingebracht werden. Die innovative Lösung wirkt dem Rollschub entgegen, der beim Befahren der Ladefläche durch Gabelstapler hervorgerufen wird.

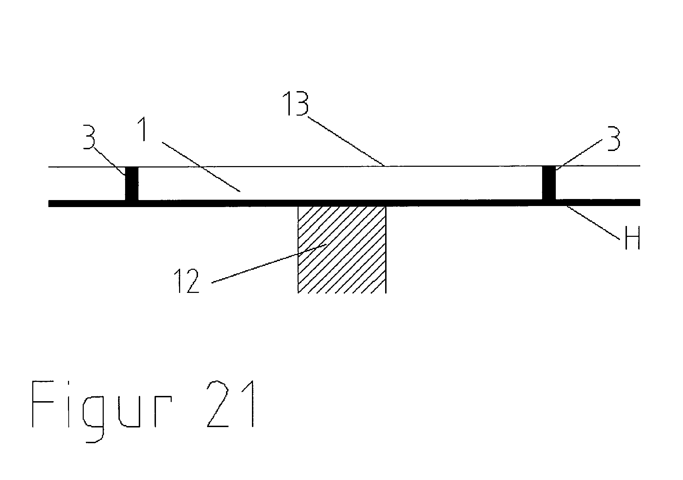

### Ausführungsbeispiel 5 : Hallensportboden (Fig. 21)

Unter dem Begriff Sportboden ist ein Bodensystem zu verstehen. Dieses besteht in der Regel aus Dämpfungselementen, einer Lattenunterkonstruktion und einer beschichteten Lauffläche (zum Beispiel ein mit Linoleum beschichteter Holzwerkstoff). Bei den herkömmlichen Sportböden wird die Flexibilität über das System realisiert. Gegenwärtig brechen bei dynamischer Belastung oft die relativ steifen Elemente eines Sportbodens (Laufflächenwerkstoff und Lattenunterkonstruktion). Den Kern (1) der mehrlagigen Platte bildet eine Spanplatte. Darauf ist als obere Deckschicht ein elastischer Bodenbelag vollflächig verklebt.
Die innovative Sportbodenplatte kann auf Grund der horizontal verlaufenden netz-oder matrixförmigen Strukturen (H) und der vertikal angeordneten Verbindungselemente (3) definiert gespannt werden. Zudem ist der erfindungsgemäße Werkstoff in Grenzen beweglich.

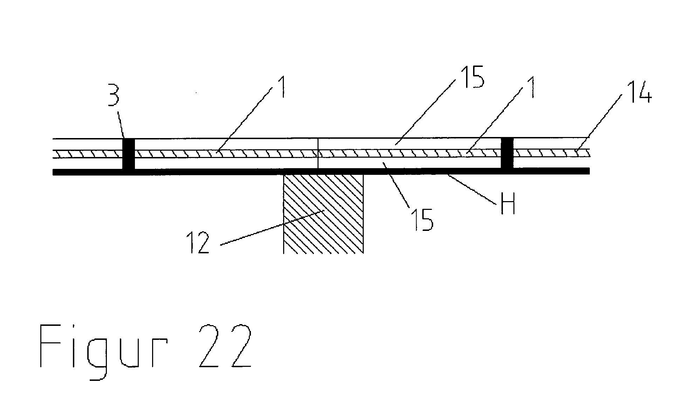

### Ausführungsbeispiel 6 : Bühnenboden (Fig. 22)

Der innovative Bühnenboden ist mehrschichtig gestaltet. Dabei besteht die Mittelzone, die den Kern (1) bildet, aus Sperrholz. Auf das Sperrholz (14) sind Vollholzlamellen (15) geklebt, die die Grundschicht und die Decklage bilden. Die Nominaldicke beträgt 45 mm. Durch das definierte Einbringen von horizontalen, armierenden Strukturen (H) kann die Lauffläche der Bühnen während der Herstellung definiert vorgespannt werden. Vorteilhaft wird zudem ein Federsprungbretteffekt erzielt.

### Ausführungsbeispiel 7: Tragwerkskonstruktion Im Bauwesen

Bei sicherheitsrelevanten Tragwerkskonstruktionen von Bauwerken (Sporthallen, Schwimmbäder, Wohn- oder Geschäftshäuser) werden bevorzugt Sensoren (Y) zum Erfassen von Materialkennwerten (z. B. Deformationen und Spannungen) an oder in den Verbindungselementen (3) angeordnet, die mit einem Datenerfassungssystem in Verbindung stehen. Dadurch können kritische Zustände (Bodensetzungen, Ermüdungsbruch) rechtzeitig erkannt und betroffene Personen gewarnt werden.

### Bezugszeichenliste

- 1: Kern
- 1o: obere Oberfläche des Kernes
- 1 u: untere Oberfläche des Kernes
- 1o: obere Kernoberfläche
- 1 u: untere Kernoberfläche
- 2: Durchdringungen (Bohrungen, Kanäle, offene Waben)
- 3: Verbindungselement
- 3o: oberes Ende des Verbindungselementes
- 3u: unteres Ende des Verbindungselementes
- 4o: obere Tragschicht
- 4u: untere Tragschicht
- 5o: mittlere Tragschicht des Obergurtes
- 5u: mittlere Tragschicht des Untergurtes
- 6o: äußere Tragschicht des Obergurtes
- 6u: äußere Tragschicht des Untergurtes

- 10: Trägerwerkstoff
- 11: Fahrzeugrahmen
- 12: Auflager
- 13: Lauffläche Sportboden
- 14: Sperrholzmittellage
- 15: Vollholzlage
- 16: Stirnwand

- A4o: äußere Fläche des Obergurtes
- A4u: äußere Fläche des Untergurtes
- B: Bohrungen
- D: Deckschicht
- G: Gleitbelag
- H: horizontal verlaufende netz- oder matrixförmige Struktur
- K: Kante
- O: Obergurt
- U: Untergurt
- S: Seitenwange
- So: Oberteil Seitenwange
- Su: Unterteil Seitenwange
- Y: Sensor

## Patentansprüche

1. Mehrlagiger Schichtwerkstoff als Halbzeug oder Fertigerzeugnis, vorzugsweise für die Herstellung von Sportgeräten und als Bauteil, vorzugsweise für die Herstellung von Ladepritschen von Nutzfahrzeugen oder von Sportböden, bestehend aus einem Kern (1), einem Ober- und/oder Untergurt (O, U), mit jeweils mindestens einer oberen und/oder einer unteren Tragschicht (4o, 4u), die durch eine Anzahl einzelner, zueinander beabstandeter und im Wesentlichen vertikal verlaufender elastischer Verbindungselemente (3) verbunden sind.

2. Mehrlagiger Schichtwerkstoff nach Anspruch 1, **dadurch gekennzeichnet, dass** die Verbindungselemente (3) als Glasfaser-, Karbonfaser-, Textilfaser-, Naturfaser-, vorzugsweise Bambusfaser-, oder als elastische, metallische Verbindung ausgebildet sind.

3. Mehrlagiger Schichtwerkstoff nach Anspruch 1 und 2, **dadurch gekennzeichnet, dass** die auskragenden Enden (3o, 3u) der Verbindungselemente (3) ausgefasert oder flächenhaft, vorzugsweise knopfförmig oder pilzartig ausgebildet sind.

4. Mehrlagiger Schichtwerkstoff nach Anspruch 1, **dadurch gekennzeichnet, dass** die Verbindungselemente (3) gleichförmig verteilt oder deren Anzahl, Abstand und Verteilung determiniert an die lokale Belastungssituation angepasst sind.

5. Mehrlagiger Schichtwerkstoff nach Anspruch 1, **dadurch gekennzeichnet, dass** der Kern (1) eine Wabenstruktur aufweist oder als Schaumkern, vorzugsweise aus Kunststoff oder Metallschaum, ausgebildet ist.

6. Mehrlagiger Schichtwerkstoff nach Anspruch 1 oder Anspruch 4, **dadurch gekennzeichnet, dass** in dem geschäumten Kern (1) Verbindungselemente (3) integriert sind und die Enden (3o) und (3u) der Verbindungselemente (3) aus dem Kern (1) herausragen.

7. Mehrlagiger Schichtwerkstoff nach Anspruch 1, **dadurch gekennzeichnet, dass** alle Tragschichten (4o, 4u, 5o, 5u) des Ober- und Untergurtes (O, U), bis auf die jeweils äußersten Tragschichten (6o, 6u), eine Anzahl von Durchdringungen (2), vorzugsweise spindel- oder kegelstumpfförmige oder zylindrische Durchdringungen (2) aufweisen.

8. Mehrlagiger Schichtwerkstoff nach einem der Ansprüche 1 oder 7, **dadurch gekennzeichnet, dass** der Ober- und/oder Untergurt (O, U) aus Glasfaser, Karbonfaser, aus einer metallischen Schicht, vorzugsweise einer Titanlegierung oder Naturfaser in Form von Laminaten besteht.

9. Mehrlagiger Schichtwerkstoff nach Anspruch 1 oder 7, **dadurch gekennzeichnet, dass** der mehrlagige Schichtwerkstoff in Längsrichtung an den Schmalseiten ein- oder mehrteilige Seitenwangen (S) aufweist.

10. Mehrlagiger Schichtwerkstoff nach Anspruch 1 oder Anspruch 9, **dadurch gekennzeichnet, dass** die in Längsrichtung geteilten Seitenwangen (S) von einem Unterteil (Su) und einem Oberteil (So) gebildet werden, die form- oder kraftschlüssig und gelenkig miteinander verbunden sind.

11. Mehrlagiger Schichtwerkstoff als Halbzeug oder Fertigerzeugnis, vorzugsweise für die Herstellung von Sportgeräten und als Bauteil, vorzugsweise für die Herstellung von Ladepritschen von Nutzfahrzeugen oder von Sportböden, bestehend aus einem Kern (1) und einem Ober- und/oder Untergurt (O, U), mit jeweils mindestens einer Tragschicht (4o, 4u), die durch eine Anzahl einzelner, zueinander beabstandeter und im Wesentlichen vertikal verlaufender elastischer Verbindungselemente (3) verbunden sind, wobei die Enden (3o, 3u) der Verbindungselemente (3) untereinander horizontal netz-oder matrixförmig verbunden sind.

12. Mehrlagiger Schichtwerkstoff nach Anspruch 11, **dadurch gekennzeichnet, dass** die Enden der Verbindungselemente (3) mit elastischen Fasern oder Faserbündeln untereinander verbunden sind, die eine horizontal verlaufende netz- oder matrixförmigen Struktur (H) bilden.

13. Mehrlagiger Schichtwerkstoff nach einem der Ansprüche 1 bis 12, **dadurch gekennzeichnet, dass** an oder in den Verbindungselementen (3) Sensoren (Y) angeordnet sind, die mit einem Datenerfassungssystem in Wirkverbindung stehen.

14. Verwendung eines mehrlagigen Schichtwerkstoffes nach einem der Ansprüche 1 bis 13 als Fertigerzeugnis oder als Halbzeug für die Herstellung von Sportgeräten, vorzugsweise für den Grundkörper von Gleitbrettern, vorzugsweise Snowboards oder Ski, von Wassersportgeräten, vorzugsweise für Surfbretter oder Rumpfteile von Booten oder Yachten oder für Flugsportgeräte, vorzugsweise für Tragflächen oder Rumpfteile.

15. Verwendung eines mehrlagigen Schichtwerkstoffes nach einem der Ansprüche 1 bis 13 als Fertigerzeugnis oder als Halbzeug für die Herstellung von Bauelementen, vorzugsweise für Laufflächen von Sport- oder Bühnenböden, für den Fahrzeugbau, vorzugsweise für die Herstellung von Ladepritschen von Nutzfahrzeugen und für die Herstellung von Rumpfteilen für Schiffe oder für Tragflächen- oder Rumpfteile von Flugzeugen.

16. Verfahren zur Herstellung eines mehrlagigen Schichtwerkstoffes nach einem der Ansprüche 1 bis 13, **dadurch gekennzeichnet, dass** in Abhängigkeit von der jeweiligen Belastungssituation des Schichtwerkstoffes die notwendige Anzahl von Durchdringungen (2) in den Kern eingebracht werden, dass mit der Herstellung der Durchdringungen (2) oder nachfolgend die vertikal wirkenden Verbindungselemente (3) eingebracht und deren auskragenden Enden aufgefächert und auf der Oberfläche der Tragschicht (4) verspannt oder verklebt werden.
